# EUROPEAN PATENT SPECIFICATION

(11) **EP 1 323 520 B1**
(45) Date of publication and mention of the grant of the patent: **28.06.2006**
(21) Application number: 02028872.6
(22) Date of filing: 23.12.2002
(51) Int. Cl.: B32B 1/08, B32B 27/32, B32B 27/30, F16L 11/04

(54) **Fuel tube**
Kraftstoffschlauch
Tuyau pour carburant

(30) Priority: 26.12.2001 JP 2001394564; 26.12.2001 JP 2001394560
(43) Date of publication of application: 02.07.2003
(73) Proprietor: TOYODA GOSEI CO., LTD., Nishikasugai-gun, Aichi 452-8564 (JP)
(72) Inventor: Koike, Masaki, c/oToyoda Gosei Co., Ltd., Nishikasugai-gun, Aichi-ken, 452-8564 (JP); Tsutsumi, Daisuke, c/oToyoda Gosei Co., Ltd., Nishikasugai-gun, Aichi-ken, 452-8564 (JP); Matsunaga, Shinji, c/oToyoda Gosei Co., Ltd., Nishikasugai-gun, Aichi-ken, 452-8564 (JP); Kondo, Mitsutaka, c/oToyoda Gosei Co., Ltd., Nishikasugai-gun, Aichi-ken, 452-8564 (JP); Miura, Natsushi, c/oToyoda Gosei Co., Ltd., Nishikasugai-gun, Aichi-ken, 452-8564 (JP); Hori, Tomokazu, c/oToyoda Gosei Co., Ltd., Nishikasugai-gun, Aichi-ken, 452-8564 (JP); Yasuda, Zenichi, c/oToyoda Gosei Co., Ltd., Nishikasugai-gun, Aichi-ken, 452-8564 (JP); Watanabe, Kazuya, c/oToyoda Gosei Co., Ltd., Nishikasugai-gun, Aichi-ken, 452-8564 (JP)
(74) Representative: TBK-Patent

(56) References cited:
- EP-A- 0 514 548
- US-A- 4 370 388
- DATABASE WPI Section Ch, Week 200006 Derwent Publications Ltd., London, GB; Class A14, AN 1999-510812 XP002242602 & JP 11 321859 A (SOLVAY SA), 24 November 1999 (1999-11-24)

## Description

The present invention relates to a fuel tube, which can suitably be used mainly for a fuel system vapor piping.

Utility of the fuel tube of the present invention is not limited to only the aforementioned vapor piping. For example, the present invention can be applied to a multi-layered resin tube for a fuel such as a fuel inlet tube which is directly contacted with a fuel.

The present invention can be applied to a fuel as far as it is a motorcar system fuel such as gasoline, gas oil, LPG and the like.

Previously, in order to enhance the anti-fuel permeability of a fuel tube, there have been proposed a number of fuel tubes composed of a multi-layer using a thermoplastic resin having the better barrier property. And, regarding interlayer adhesion in a fuel tube composed of a multi-layer, there have been a number of reports.

For example, JP-A 11-321859 discloses a fuel tube in which a barrier layer composed of EVOH and a layer (protective layer) composed of a polymer alloy of HDPE and maleic acid-modified polyethylene are laminated without using an adhesive layer.

However, there was a problem that the aforementioned fuel tube is weaker in the interlayer adhering force as compared with a fuel tube in which layers are connected via an adhesive layer. In addition, since the aforementioned fuel tube is thick (total thickness: 1.5mm or larger), there was a problem that it is poor in the flexibility.

U.S. 4,370,388 discloses a multilayer structure composed of a particularly defined grafted high-density polyethylene resin layer directly attached to a layer of a resin, said resin being selected from a group of further specified resins.

EP-A-9 514 548 is concerned with a multi-layer laminate molding comprising a main material layer of PE resin at the outer side and a layer made of saponified EVA copolymer or polyamide at the inner side, wherein said two layers are laminated through at least an adhesive layer.

An object of the present invention is to provide a fuel tube having the strong interlayer adhering force even without using an adhesive layer, and having an excellent flexibility, while retaining the anti-fuel permeability equivalent to that of the conventional fuel tube.

A fuel resin tube of the present invention has the construction as set forth in claim 1.

By forming the modified HDPE layer of dicarboxylic acid-modified HDPE, the modified HDPE layer (outer layer) retains the prescribed flexibility, and the adherability with an EVOH layer (barrier layer) is improved.

In the foregoing, it is desirable that the modified HDPE is maleic acid modified HDPE. This is because the adherability with an EVOH layer becomes further better.

In the foregoing, it is desirable that an alloy component of the extruded modified HDPE material is an olefin system copolymer having many branches and/or intermediate density or low density polyethylene. This is because the flexibility and the moldability of a fuel tube are improved.

In the foregoing, it is desireble that the oelfin series copolymer has the properties of the MFR value (230°C, JIS K 7210): about 0.1 to 100g/10min. and the bending module (ASTM D 790): about 5 to 100 Mpa. This makes the flexibility and the moldability of a fuel tube to be improved.

In the aforementioned construction, it is desireble that an olefin series comonomer is selected from ehylene, propylene, or butene. An olefin series copolymer composed of these comonomers is excellent in the general utility and the compatibility with modified HDPE, and a fuel tube having the better properties and the moldability is easily obtained.

In the aforementioned construction, the modified HDPE is selected in a range of density: 930 to 975kg/cm³.

The aforementioned fuel tube can be formed by simultaneously extruding a modified HDPE layer (outer layer) and an EVOH layer (barrier layer), and can be formed in a bellows shape. Since the adherability becomes better as described above, interlayer pealing does not occur even when processed into a bellows shape.

Moreover, in the aforementioned respective construction, the modified HDPE layer (inner layer) can be also formed inside the EVOH layer. In this case, it is preferable for fuel tube like a fuel inlet tube such that the fuel is directly in contact with the inner layer.

In another preferred embodiment of the fuel tube of the present invention a polymer alloy of the HDPE extruded material contains dicarboxylic acid modified polyolefin, the MFR value of which (230°C: JIS K 7210) is larger compared to the MFR value of HDPE (190°C: JIS K 7210).

The adherability between the barrier layer (EVOH layer) and the outer layer (HDPE layer) is enhanced by the fact that the MFR value of dicarboxylic acid modified polyolefin (230°C: JIS K 7210) is larger comparing to the MFR value of HDPE (190°C: JIS K 7210), specifically, dicarboxylic acid modified polyolefin is made into a polymer alloy in a melt viscosity relationship with HDPE such that dicarboxylic acid modified polyolefin which is an adhesive component becomes in a matrix phase (continuous phase).

In the aforementioned, it is desirable that the polymer alloy contains HDPE in the range of about 50 to 75 mass portions, ethylene-α olefin copolymer in the range of about 5 to 10 mass portions and dicarboxylic acid modified polyolefin is in the range of about 20 to 45 mass portions.

If the amount of dicarboxylic acid modified polyolefin which is an adhesive component is less than the amount of HDPE, from the aforementioned melt viscosity ratio, the adhesive component becomes in a matrix phase (continuous phase). Hence, the adhesive force of it becomes higher comparing to that of the conventional fuel tube based on HDPE. Moreover, the flexibility of a fuel tube is enhanced by containing ethylene-α olefin copolymer.

In the aforementioned construction, it is desirable that the total thickness of the fuel tube is in the range of about 0.5 to 1.5 mm, the fuel tube rigidity is about 30 N or less and the fuel permeability (CE10) is about 30mg/m · day or less. A fuel tube having the pliability can be obtained by setting the thickness and rigidity as aforementioned.

The aforementioned fuel tube can be formed in a bellows shape. The interlayer pealing off or the like will not occur even if the processing of making it in a bellows shape or the like is performed since the adherability has been enhanced as being excellent as aforementioned. For that reason, it becomes possible to impart the flexibility property to a fuel tube.
Fig. 1 is a perspective showing one example of construction (two-layered construction) of a fuel tube of the present invention.
Fig. 2 is a perspective showing when processed into a fuel tube of the present invention.
Fig. 3 is a transverse cross-sectional view showing another example of construction (three-layered construction) of a fuel tube of the present invention.
Fig. 4 is a schematic view showing an aspect where a fuel tube of the present invention is fitted into a fuel inlet tube to which the fuel tube of the Fig. 3 is to be applied.

Embodiments of the present invention will be explained below. In the present specification, "%", "part" and the like representing an amount to be incorporated is in a weight unit, unless otherwise indicated.

In addition, the fuel permeability (CE10) is a value when Fuel C (JIS K 6258 Table 1)/ethyl alcohol (volume ratio) = 90/10 is used as a subject into which a fuel is to be permeated.

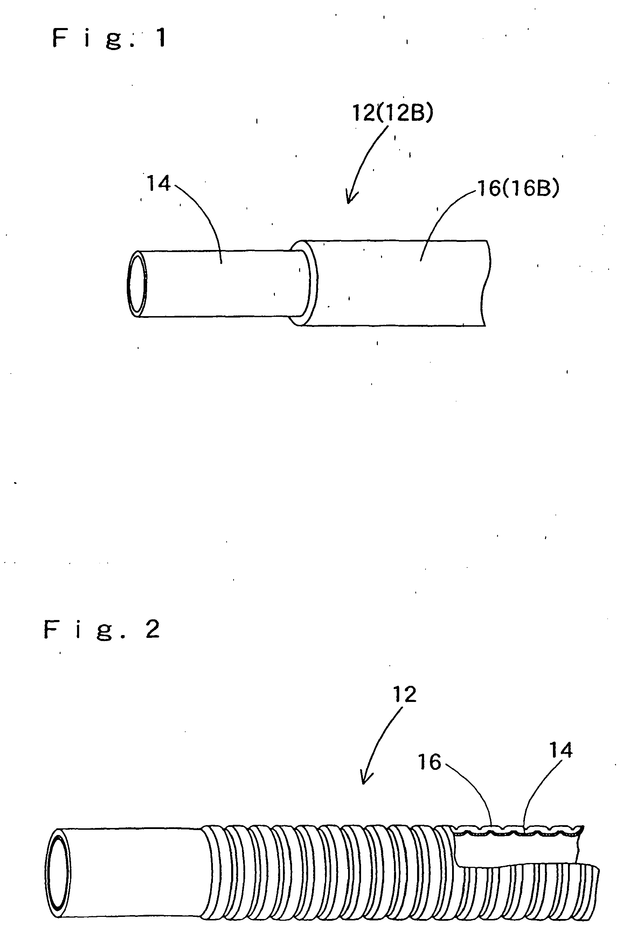

One embodiment of a fuel tube 12 of the present invention is, as shown in Fig. 1, constructed of an EVOH layer 14 (barrier layer) formed of an extruded EVOH material based on EVOH and a modified HDPE layer 16 (outer layer) formed of an extruded modified HDPE material based on a polymer alloy which is based on a modified HDPE or containing mainly modified HDPE.

The aforementioned EVOH is a crystallizable polymer in which an ethylene-vinyl acetate copolymer (EVAC) obtained by copolymerizing ethylene and vinyl acetate is subjected to saponification hydrolysis. The gas barrier property thereof shows the highest level among various plastics. An ethylene copolymerization ratio is usually 30 to 40% and, as the ethylene content grows, a melting point is lowered, the gas barrier property is lowered, and the bending modulus becomes smaller.

Therefore, by using in the fuel tube 12, the anti-fuel permeability becomes better. In particular, the barrier property to an alcohol-added gasoline, so-called "gasohole" is excellent, and EVOH is generally used as a material for a fuel tube 12.

In addition, as a specific EVOH material, the materials sold under the trade name of "EVAL EP-F101, H101, E105" and the like by Kuraray Co., Ltd. can be used.

In addition, HDPE is also a material generally used in the field of a fuel tube 12. In the present invention, the aforementioned modified HDPE is used. As the modified material, dicarboxylic acid modified material is used. By modification with dicarboxylic acid, the adherability with a barrier layer 14 comprising the aforementioned EVOH is considerably improved.

As the dicarboxylic acid-modified HDPE, HDPE and the like modified with maleic acid, fumaric acid, itaconic acid or anhydride thereof which is each dicarboxylic acid, can be used. Particularly, a maleic acid anhydride-modified HDPE can preferably be used.

As the modifying method, there are a method of introducing a dicarboxylic acid monomer into HDPE by copolymerizing the above-exemplified dicarboxylic acid and an ethylene monomer, and a method of introducing the aforementioned dicarboxylic acid into HDPE by a graft copolymerrization, and those methods being able to be used.

In addition, the modification ratio of the dicarboxylic acid-modified HDPE is about 0.1 to 3%. When the modification ratio is too high or too low, the adherability is lowered.

Here, use of monocarboxylic acid-modified HDPE which is modified with acrylic acid, methacrylic acid or the like, or epoxy-modified material which is modified with glycidyl methacrylate can be contemplated, in place of use of dicarboxylic acid-modified HDPE, but it is presumed that the effect is lower as compared with a dicarboxylic acid-modified material.

The aforementioned dicarboxylic acid-modified HDPE having a MFR value (190°C) of about 0.2 to 3.0g/10min is used.

The MFR value is a weight of a material per minute which has been extruded through a die under the prescribed conditions of a temperature and a pressure in a flowability test of a thermoplastic plastic using an extrusion type plastometer, and is closely related to the viscosity of a material at the extrusion temperature. That is, as the viscosity of a material at the temperature grows higher, the MFR value grows smaller. In the present specification, the MFR value is a value based on JIS K 7210 (corresponding to ISO 1133 or ASTM D 1238).

By forming a modified HDPE layer (outer layer) with dicarboxilic acid modified HDPE as described above, the modified HDPE layer has the prescribed flexibility, and the adherability with an EVOH layer (barrier layer) is improved.

The aforementioned modified HDPE is appropriately selected from a rage of a density of about 930 to 975 kg/m³ depending on the required property.

When a polymer alloy having mainly modified HDPE as a base for a molding material for the aforementioned outer layer is used, it is desirable that an alloy component is composed of an olefin series copolymer having many branches and/or a blend of intermediate density or low density polyethylene.

In addition, it is desirable that the olefin series copolymer having the MFR value (230°C): about 0.1 to 100g/10min., desirably about 0.4 to 40g/10min. from a viewpoint of the moldability is selected, and the bending modulus (ASTM D 790) is appropriately selected from a range of about 5 to 100MPa depending on the required property.

The olefin series copolymer to be contained in the aforementioned extruded EVOH material is essentially a soft component (rubber component), and is contained in order to impart the flexibility to the fuel tube 12. A comonomer constituting the olefin series copolymer is desirably selected from ethylene, propylene and butane.

Usually, by using an ethylene-a olefin copolymer and increasing relatively an amount of α olefin (expect for ethylene), a branched degree is increased. Specifically, an ethylene propylene series copolymer employing propylene as α olefin is preferably used, or alternatively, as α olefin other than ethylene and propylene, 1-butene, 1-pentene, 1-hexane and the like may be copolymerized. Further, non-conjugated diene such as 1,4-hexadiene, dicyclopentadiene, ethylidenenorbornene may be appropriately copolymerized with the above monomers.

When a ratio of the aforementioned olefin series copolymer to be blended with dicarboxilic acid-modified HDPE is small, it is difficult to maintain the flexibility of the fuel tube 12. Conversely, when a blending ratio is too high, it is difficult to maintain the heat resistance or the resistance to fuel oil.

The aforementioned olefin series copolymer and dicarboxilic acid-modified HDPE are classified as a polymer alloy in which a side having the greater MFR value is a matrix phase (continuous phase). From a viewpoint of the adherability, it is desirable that dicarboxilic acid-modified HDPE is a matrix phase (continuous phase).

The polymer alloy is a multi-component system in which heterogeneous polymer chains coexist microscopically, and the polymer alloy may have various layer structures by controlling the conditions such as the affinity of a constituting polymer and the like.

A ratio of dicarboxilic acid-modified HDPE and olefin series copolymer (ethylene-α olefin copolymer) to be incorporated into the polymer alloy in an extruded modified HDPE material can be appropriately set in a range satisfying the aforementioned bending modulus (ASTM D 790). When an amount of dicarboxilic acid-modified HDPE is too small, the adherability is lowered. Conversely, when the amount is too high, the tube cost is elevated.

In addition, the aforementioned extruded modified HDPE material may contain generally-used additives and other polymers in such a range that the effects of the present invention (adherability, flexibility etc.) are not affected.

In the aforementioned construction, the thickness of the fuel tube 12 can be set taking the flexibility, the anti-fuel permeability and the like into consideration. Specifically, a thickness of an outer layer is to set to about 0.4 to 1.2 mm, desirably about 0.7 to 0.9 mm and a thickness of barrier layer is about 0.1 to 0.3 mm. When a barrier layer is too thick, a problem easily occurs on the flexibility of the fuel tube 12. Conversely, when the barrier layer is too thin, a problem easily occurs on the barrier property. In addition, when the outer layer is too thick, a problem easily occurs on the flexibility. Conversely, when the outer layer is too thin, the layer is easily twisted. Or, a problem easily occurs on the resistance to weather.

In addition, it is desirable that the fuel permeability is about 30mg/m·day or smaller, desirably about 20mg/m·day or smaller, more desirably about 10 mg/g·day or smaller. By setting a thickness as described above, the fuel tube 12 having a better barrier property (anti-fuel permeability) and the flexibility can be obtained.

In addition, the aforementioned extruded modified HDPE material (outer layer material) may contain generally used additives and other polymers in such a range that the effects of the present invention (adherability, flexibility etc.) are not affected. In addition, the barrier layer also may contain generally-used additives and other polymers in such a range that the effects of the present invention (adherablity, flexibility) are not affected.

The aforementioned fuel tube 12 is formed by directly adhering a modified HDPE layer (outer layer) 16 and an EVOH layer (barrier layer) 14 by coextrusion. In addition, molding can be performed by using generally-used extrusion molding machines.

In addition, the aforementioned fuel tube can be made into a bellows shape as shown in Fig.2. In the fuel tube of the present invention, since it has a better adherability as described above, interlayer peeling does not occur between an outer layer 16 and a barrier layer 14 even when processed into a bellows shape. Therefore, it becomes possible to impart the flexibility property to a fuel tube in respect of a shape as well.

The fuel tube 12 having the aforementioned bellows shape can be prepared by continuous bellows molding extrusion in which a tube is extruded and, at the same time, is molded with a corrugater to impart a bellows shape thereto.

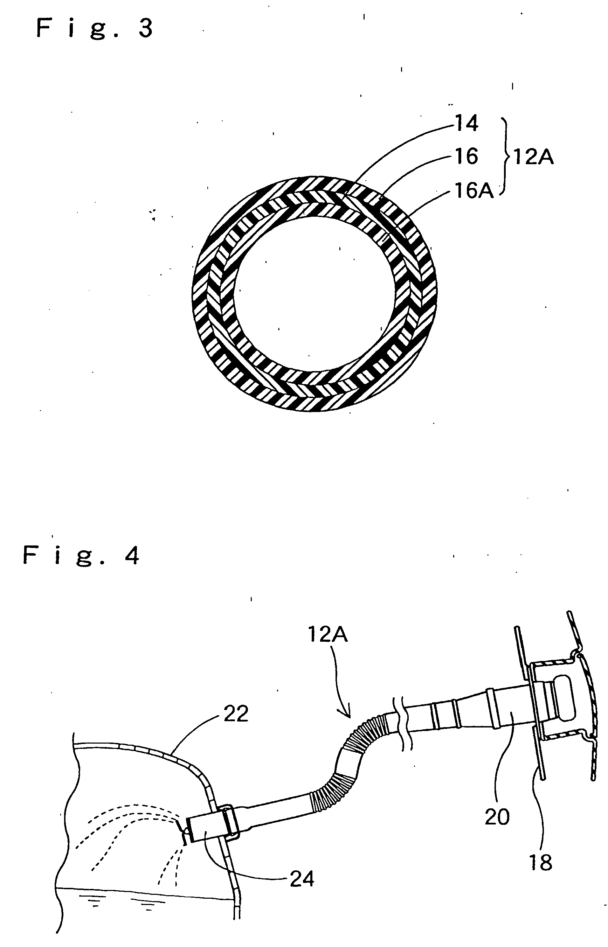

In addition, when the fuel tube of the present invention is applied to a fuel inlet tube, since an inner side is directly contacted with a fuel, a three-layered construction is desirably adopted such that the same modified HDPE layer 16A as that formed on the outer side is also formed on the inner side of an EVOH layer 14 as shown in Fig. 3. This construction serves to prevent an EVOH layer from directly contacting with a fuel and prevent the anti-fuel vapor permeability (gas barrier property) of the EVOH layer from decreasing.

In addition, the fuel inlet tube 12A is used by connecting to between an oiling pipe 20 attached to the body metal plate 18 and the fuel injecting pipe 24 of the fuel tank 22 as shown in Fig. 4, and is usually partially formed into a bellows shape.

Upon this, a thickness of the fuel inlet tube 12A can be set taking the flexibility, the anti-fuel vapor permeability and the like into consideration. Specifically, a thickness of the modified HDPE layer 16 and that of an EVOH layer 14 on an outer side are as described above, and a thickness of the modified HDPE layer 16A on the inner side is about 0.1 to 0.8mm, desirably about 0.4 to 0.6mm.

Then, another embodiment of a fuel tube of the present invention will be explained. In the following explanation, regarding terms and materials explained in the aforementioned embodiment, explanation is omitted in some cases.

The fuel tube 12B of the present embodiment is provided with the EVOH layer (barrier layer) 14 and the outer layer 16B on its outer side as in the aforementioned embodiment. And, the outer layer 16B is the HDPE layer (outer layer) 16B formed of an extruded HDPE material based on a polymer alloy containing mainly HDPE. That is, in the present embodiment, a modified HDPE layer is a HDPE layer.

HDPE is a material which is generally used in the field of a fuel tank made of a resin.

In the fuel tube 12A of the present embodiment, a polymer alloy which is a base for the aforementioned extruded HDPE material contains dicarboxylic acid-modified polyolefin.

The aforementioned dicarboxylic acid-modified polyolefin plays a role as an adhesive component contributing to adhesion with the EVOH layer (barrier layer) 14 of the HDPE layer (outer layer) 16B by inclusion in a polymer alloy of an extruded HDPE layer material.

As a dicarboxylic acid-modified polyolefin, polyolefins modified with maleic acid, fumaric acid, itaconic acid and anhydride which are unsaturated dicarboxylic acid can be used. As polyolefin, polyethylene, polypropylene and the like can be used. Specifically, maleic anhydride-modified polypropylene is suitably used.

As the aforementioned modification method, there are a method of introducing a dicarboxylic acid monomer into polyolefin by copolymerizing the above-exemplified dicarboxylic acid with an olefin monomer, and a method of introducing the aforementioned dicarboxylic acid into polyolefin by graft copolymerization, both methods being able to be used.

In addition, a modification rate of dicarboxylic acid-modified polyolefin is about 0.1 to 3%, more desirably about 0.5 to 1.5%. When a modification rate is too low, the adherability is lowered. When a modification rate is too high, the physical properties of a base material can not be maintained, or the adherability may be decreased.

Here, use of respective modified materials by monocarboxylic acid modification using acrylic acid, methacrylic acid or the like, epoxy group modification using glycidyl methacrylate can be also contemplated in place of use of dicarboxylic acid modified polyolefin, but the effects are presumed to be smaller as compared with dicarboxylic acid-modified materials.

And, in the present embodiment, the MFR value (230°C) of dicarboxylic acid-modified polyolefin is greater as compared with the MFR value (190°C) of HDPE.

As described above, by adopting a polymer alloy in an extrude HDPE material having such the viscosity relationship that dicarboxylic acid-modified polyolefin as an adhering component is a matrix phase (continuous phase), the HDPE layer (outer layer) 16B is well adhered to EVOH layer (barrier layer) 14.

On the other hand, it is considered that the previous resin tube (see JP-A 11-321859) has the weak adhering force because a component forming a matrix phase (continuous phase) is reverse, that is, HDPE.

In the aforementioned construction, it is desirable that a polymer alloy contains about 25 to 80 parts of HDPE, desirably about 45 to 75 parts, more desirably about 50 to 70 parts, about 1 to 30 parts of an ethylene-α olefin copolymer, desirably about 3 to 20 parts, more desirably about 5 to 10 parts, and about 20 to 45 parts of dicarboxylic acid-modified polyolefin, desirably about 25 to 40 parts, more desirably about 30 to 35 parts.

Even when an amount of dicarboxylic acid-modified polyolefin which is an adhering component is smaller than a total amount of HDPE and ethylene-α olefin, a polymer alloy is such that an adhering component is a matrix phase (continuous phase) from the relationship of a viscosity ratio as described above. Therefore, the adhering force of the HDPE layer 16B to the EVOH layer 14 is heightened as compared with the previous HDPE-based fuel tube.

When an amount of HDPE is too small, the heat resistance and the anti-fuel oil of a tube are decreased. Conversely, when the amount is too large, there is a possibility that the flexibility of the tube is lowered (rigidity becomes too high) and, at the same time, the adherability between the barrier layer 14 and the outer layer 16B is lowered.

In addition, when an amount of dicarboxylic acid-modified polyolefin is too small, there is a possibility that the adherability between a barrier layer 14 and the outer layer 16B is lowered. Conversely, too large amount leads to a high cost.

An ethylene-α olefin copolymer contained in a polymer alloy in the aforementioned extruded HDPE material is a rubber component, and is contained in order to impart the flexibility to the fuel tube 12B. As the ethylene-α olefin copolymer, usually, an ethylene-propylene copolymer, a tercopolymer in which the above copolymer is further copolymerized with 1,4-hexadiene, dicyclopentadiene, or ethylidenenorbornene can be used.

When the content of the aforementioned ethylene-α olefin copolymer in a polymer alloy is too small, it is difficult to maintain the flexibility of the fuel tube 12B. Conversely, when the content is too large, it is difficult to maintain the heat resistance and the anti-fuel oil.

In addition, the aforementioned extruded HDPE material may contain generally used additives and other polymers in such a range that the effects of the present invention (adherability, flexibility etc.) are not affected.

In the aforementioned construction, it is desirable that dicarboxylic acid-modified polyolefin is further contained in an extruded EVOH material. By inclusion of the aforementioned adhering component in an extruded EVOH material as well, the HDPE layer (outer layer) 16 and the EVOH layer (barrier layer) 14 are adhered firmly.

As the aforementioned dicarboxylic acid-modified polyolefin, polyolefins described in the column of the aforementioned polymer alloy can be used.

In the aforementioned construction, the fuel tube 12B has a total thickness of about 0.5 to 1.5mm, desirably about 0.8 to 1.2 mm, a barrier layer thickness of about 0.1 to 0,3 mm, desirably about 0.15 to 0.25 mm, a fuel tube rigidity of about 30N or smaller, desirably about 25N or smaller, and the fuel permeability (CEO10) of about 30mg/m· day, desirably about 20mg/m·day or smaller. By setting a thickness and a rigidity as described above, a barrier property becomes better, and the fuel tube 12B having the better property and the flexibility can be obtained.

In addition, the aforementioned barrier layer may also contain generally used additives and other polymers in such a range that the effects of the present invention (adherability, flexibility etc.) are not affected as in the aforementioned embodiment.

The aforementioned fuel tube can be prepared usually by simultaneous extrusion (coextrusion) and can be made into a bellows shape as in the aforementioned embodiment.

The aforementioned respective embodiments was be explained by way of a two-layered construction or a three-layered construction in which the modified HDPE layer 16(16B) or 16A is formed on the outer side or further on an inner side of the EVOH layer 14. However, a construction of four layers or more is possible in which a thermoplastic resin layer adherable to the first and second HDPE layers is formed on an outer side and/or on an inner side of a three-layered construction.

### <Examples>

Examples which were performed to confirm the effects of the present invention will be explained below. In the present Examples, materials listed below were used.
HDPE··· "Hizex 6300M" (manufactured by Mitsui chemicals): MFR value (190°C): 0.11g/10min
Maleic anhydride modified HDPE ①··· HDPE "Admer HE050" (manufactured by Mitsui chemicals): modification amount 0.2 to 0.25%, MFR value (190°C): 0.35/10min, density:959kg/m³ (Example 1)
Maleic anhydride-modified HDPE ②··· "Admer HF500" (manufactured by Mitsui chemicals, olefin system copolymer-containing polymer alloy): modification amount 0.2 to 0.25%, MFR value (190°C): 1.0g/10min, density: 938kg/m³(Example 2)
EVOH "Evar F-101"(manufactured by Kuraray), MFR value (190°C): 1.3g/10min,
Ethylene-α olefin copolymer: "Tufter P-0775"(manufactured by Mitusikagaku)
Maleic anhydride-modified polypropylene: "Admer JH929" modification amount 0.93%, MHR value (230°C): 8.6g/10min

### Example 1/Comparative Example 1

### <Comparative Example 1-1>

The fuel tube 12 of a two-layered construction having a shape shown in Fig. 1 was formed by forming the outer layer 16 of HDPE and forming the barrier layer 14 of EVOH. Tube outer diameter: 8mm, outer layer thickness: 0.7 to 0.8mm, barrier layer thickness:0.2 to 0.3 mm, two layers coextrusion.

### <Example 1-1>

The fuel tube 12 of a two layered construction having a shape shown in Fig. 1 was formed by forming the modified HDPE layer (outer layer) 16 of "Admer HE050" (maleic anhydride HDPE) and forming an EVOH layer (barrier layer) 14 of EVOH. Dimensional specifications of the fuel tube were the same as those of Comparative Example 1-1.

### <Example 1-2>

According to the same manner as that of Example 1 except that a modified EVOH layer (outer layer) 16 was formed of "Admer HF500" (polymer alloy containing mainly maleic anhydride HDPE) in place of "Admer HE050", a tube was prepared.

### <Example1-3>

The fuel tube 12 of a two-layered construction having a bellows shape shown in Fig. 2 was formed by forming the outer layer 16 of "Admer HF500" (polymer alloy containing mainly maleic anhydride HDPE) and forming the barrier layer 14 of EVOH. Dimensional specifications (extrusion outer diameter, outer layer barrier layer thickness) of a fuel tube were the same as those of Comparative Example 1-1.

### <Comparative Example 1-2>

Inner and outer HDPE layers (inner layer.outer layer) 16, 16 were formed of "Hizex6300M", an EVOH layer was formed of "Evar F-101" by three layers coextrusion. Dimensional specifications of a tube were as follows: outer diameter 8mm, inner layer thickness about 0.2mm, outer layer thickness about 0.5mm, intermediate layer (barrier layer) thickness 0.2mm

### <Example 1-4>

First and second modified HDPE layers 16 were formed of "Admer HE050", and an EVOH layer was formed of "Evar F-101" by three layers coextrusion. Dimensional specifications were the same as those of Comparative Example 1-2.

### <Example 1-5>

First and second modified HDPE layers 16 were formed of "Admer HF500", and an EVOH layer was formed of "Evar F-101". Dimensional specifications were the same as those of Comparative Example 2-1.

Regarding Comparative Examples 1-1,2 and Examples 1-1·2·4·5, the adherability, the barrier property and the flexibility was assessed.

### <Adherability assessment>

As the adherability, the initial adhering force in the state of a half tube was measured by a 180°peeling test (stretching rate: 50mm/min) (JIS K 6718).

As a result, in the resin tubes of Comparative Examples 1-1 and 1-2, interlayer peeling occurred at resin tube cutting, and measurement was impossible. On the other hand, in resin tubes of Examples 1-1 and 1-4, the better interlayer adhering force of about 63.7N/cm was obtained and, in resin tubes of Examples 1-2 and 1-5, the better interlayer adhering force of about 41.0N/cm was obtained.

In addition, even in the case of a bellows shape as in Example 1-3, interlayer peeling between the barrier layer and the outer layer did not occur.

### <Barrier property assessment>

The barrier property was measured by the SHED method. As a fuel, gasoline containing 10% ethanol (vapor state) was used.
As a result, it was seen that respective resin tubes in Examples 1 2 and 4.5 had all the fuel permeability of 1.1mg/m·day, and they have the better barrier property.

The resin tube of Example 1-3 has a great inner surface area due to a bellows shape and has the increased permeability, but even a bellows is sufficiently satisfactory (4.2mg/m·day).

### <Flexibility assessment>

The flexibility was assessed by the following bending rigidity test.

A test piece (tube) cut into 280mm was supported at two points (distance 162mm), to a central part of which was added a load to crook, a load at which a deformed amount of an end of a test piece became 50mm, was obtained.

As a result, the load was 40N in Comparative Example 1-1, while the load was 44.6N in Examples 1-1 and 1-4 or 24.5N in Examples 1-2 and 1-5. Thus, the better flexibility was obtained when extruded modified HDPE materials with an olefin system copolymer added thereto were used.

### Example 2/ Comparative Example 2

Regarding Examples in another embodiment of the present invention, a test piece was made as follows.

### <Example 2-1>

The fuel tube 12 of a two-layered construction comprising the about 0.8mm HDPE layer (outer layer) having a tube outer diameter of about 8 mm and the about 0.2mm EVOH layer (barrier layer) 14 was prepared by coextrusion using a polymer alloy having the following composition and the aforementioned EVOH.
Polymer alloy···HDPE: 75 parts, ethylene-α olefin copolymer: 5 parts, maleic anhydride-modified polypropylene:20 parts

### <Example 2-2>

A fuel tube of the same two-layered construction as that of Example 1 was prepared by coextrusion by using a polymer alloy having the following composition and the aforementioned EVOH.
Polymer alloy... HDPE: 65 parts, ethylene-α olefin copolymer: 5 parts, maleic anhydride-modified polypropylene:30 parts

### <Assessment test>

Regarding the aforementioned tubes of respective Examples, an adhering force test, a flexibility assessing test (bending rigidity test), and a fuel permeability test were performed according to the same manner as that described above.
And, the results thereof are shown in Table 1, and it is seen that the sufficient adhering force, flexibility and anti-fuel permeability are exhibited.

**Table 1**

| | | Example 2-1 | Example 2-2 |
|---|---|---|---|
| Polymer alloy composition | HDPE | 75 parts | 65 parts |
| | Ethylene-α olefin copolymer | 5 parts | 5 parts |
| | Modified polypropylene | 20 parts | 30 parts |
| Adhering force (N/cm) | | 15.7 | 24.6 |
| Flexibility(bending rigidity) | | 23.3 | 27.5 |
| Fuel permeability (mg/m²·SHED) (gasoline +EtOH 10% vapor state) | | 1.1 | 1.1 |

## Claims

1. A multi-layered resin tube for fuel comprising:
an ethylene-vinyl alcohol copolymer (EVOH) layer formed of an EVOH-based extruded EVOH material, and a high density polyethylene (HDPE) layer formed of an extruded HDPE material which is contacted with an outer side of the EVOH layer, wherein the HDPE, material is based on a dicarboxylic acid-modified HDPE (modified HDPE), the modified HDPE has a melt mass flow rate (MFR) value (190°C; JIS K 7210) of 0.2 to 3.0g/10min, has a modification ratio of 0.1 to 3% and has a density of 930 to 975kg/m, and a thickness of the EVOH layer and a thickness of the HDPE layer range 0.1 to 0.3 mm and 0.4 to 1.2 mm, respectively.

2. The tube according to claim 1, wherein the modified HDPE is maleic acid-modified HDPE.

3. The tube according to claim 1 or 2, wherein the EVOH layer and the modified HDPE layer are formed by coextrusion molding.

4. The tube according to claim 1, 2 or 3, wherein at least a part of a shape of the multi-layered resin tube is a bellows shape.

## Patentansprüche

1. Mehrschichtiger Harzschlauch für Kraftstoff, umfassend:
eine Schicht aus Ethylen-Vinylalkohol-Copolymer (EVOH), gebildet aus einem EVOH-basierenden extrudierten EVOH-Material, und
eine Schicht aus Polyethylen hoher Dichte (HDPE), gebildet aus einem extrudierten HDPE Material, die mit einer äußeren Seite der EVOH Schicht in Berührung ist, wobei
das HDPE Material basiert auf einem Dicarbonsäuremodifizierten HDPE (modifiziertes HDPE), das modifizierte HDPE eine Schmelzmassendurchflussgeschwindigkeit (MFR) (190°C; JIS K 7210) von 0,2 bis 3,0g/10min besitzt, ein Modifizierungsverhältnis von 0,1 bis 3% und eine Dichte von 930 bis 975 kg/m³ hat, und eine Dicke der EVOH Schicht und eine Dicke der HDPE Schicht jeweils in einem Bereich von 0,1 bis 0,3 mm bzw. 0,4 bis 1,2 mm liegt.

2. Schlauch nach Anspruch 1, wobei das modifizierte HDPE Maleinsäure-modifiziertes HDPE ist.

3. Schlauch nach Anspruch 1 oder 2, wobei die EVOH Schicht und die modifizierte HDPE Schicht durch Coextrusionsformen gebildet werden.

4. Schlauch nach Anspruch 1, 2 oder 3, wobei mindestens ein Teil der Gestalt des mehrschichtigen Harzschlauchs die Gestalt von Falten hat.

## Revendications

1. Durite en résine multicouche pour carburant comprenant : une couche en copolymère d'éthylène/alcool vinylique (EVOH) formée d'un matériau en EVOH extrudé à base d'EVOH, et une couche en polyéthylène haute densité (HDPE) formée d'un matériau en HDPE extrudé qui est mis en contact avec un côté extérieur de la couche en EVOH, dans laquelle le matériau en HDPE est à base d'un HDPE modifié par un acide dicarboxylique (HDPE modifié), le HDPE modifié a un indice de débit massique à l'état fondu (MFR) (190°C ; JIS K 7210) de 0,2 à 3,0 g/ 10 min, un rapport de modification de 0,1 à 3 % et une masse volumique de 930 à 975 kg/m, et l'épaisseur de la couche en EVOH et l'épaisseur de la couche en HDPE sont respectivement situées dans les plages allant de 0,1 à 0,3 mm et de 0,4 à 1,2 mm.

2. Durite selon la revendication 1, dans laquelle le HDPE modifié est un HDPE modifié par de l'acide maléique.

3. Durite selon la revendication 1 ou 2, dans laquelle la couche en EVOH et la couche en HDPE modifié sont formées par moulage par coextrusion.

4. Durite selon la revendication 1, 2 ou 3, dans laquelle au moins une partie d'une forme de la durite en résine multicouche est une forme de soufflet.
